# EUROPÄISCHE PATENTSCHRIFT

(11) **EP 1 452 758 B1**
(45) Veröffentlichungstag und Bekanntmachung des Hinweises auf die Patenterteilung: **22.11.2006**
(21) Anmeldenummer: 04000394.9
(22) Anmeldetag: 10.01.2004
(51) Int. Cl.: F16D 1/033

(54) **Wellenflanschverbindung und Verfahren zum Herstellen einer derartigen Wellenflanschverbindung**
Flange connection for shafts and method of making such a connection
Raccord à brides pour arbre et procédé pour faire un tel raccord

(30) Priorität: 25.02.2003 DE 10308242
(43) Veröffentlichungstag der Anmeldung: 01.09.2004
(73) Patentinhaber: Köllges, Ralf, 41238 Mönchengladbach (DE)
(72) Erfinder: Köllges, Ralf, 41238 Mönchengladbach (DE)
(74) Vertreter: Bauer, Wulf

(56) Entgegenhaltungen:
- DE-C- 667 241
- US-A- 3 099 470
- US-A- 5 170 551

## Beschreibung

Die Erfindung bezieht sich auf eine Wellenflanschverbindung mit einem ersten und einem zweiten Wellenflansch, die jeweils passende Flanschbohrungen aufweisen und die in einer Kontaktfläche aneinander liegen, mit mindestens einem Schaftbolzen der einen Außenkonus aufweist, und mit einer mit diesem Schaftbolzen zusammenwirkenden Hülsenanordnung, die einen Innenkonus hat, der dem Außenkonus angepasst ist und die einen Mantel hat, der den Flanschbohrungen angepasst ist, sowie auf ein Verfahren zum Herstellen einer derartigen Wellenflanschverbindung.

Aus DE 2 938 476 ist eine derartige Wellenflanschverbindung der eingangs genannten und ein entsprechendes Verfahren zu ihrer Herstellung bekannt. Als Hülsenanordnung wird eine Hülse benutzt, die sich innerhalb der beiden Flanschbohrungen der Wellenflansche befindet. Sie wird auf den Außenkonus des Schaftbolzens aufgesteckt und so axial fixiert, dass sie innerhalb der beiden Flanschbohrungen bleibt. Nun wird durch axiale Zugkraft, insbesondere durch eine hydraulische Spannvorrichtung, der Schaftbolzen axial relativ zur Hülsenanordnung und auch relativ zum benachbarten Flansch an dem Endbereich gezogen, der sich in Nähe des kleinsten Durchmessers des Außenkonus befindet. Die Hülse bleibt dabei stationär, der Konus bewegt sich relativ zur Hülse und spreizt diese nach außen, bis die Flanschbohrungen ausgefüllt sind, also ein Presssitz erreicht ist. Auf diese Weise ist es möglich, die Flanschbohrung praktisch zu 100% mit hochfestem Metall auszufüllen. Anschließend wird noch eine axiale Spannung auf den Schaftbolzen aufgebracht und diese mechanisch gesichert. Hierzu hat der Schaftbolzen an seinen beiden Endbereichen jeweils einen Gewindeabschnitt, für die mechanische Sicherung werden Muttern verwendet.

Dieses Verfahren hat sich ausgesprochen bewährt. Es ermöglicht, dass der Schaftbolzen den Schaftbohrungen so gut wie möglich angepasst ist und nach der Expansion praktisch keinerlei Spiel mehr hat. Durch die axiale Vorspannung wird der Schaftbolzen optimal belastet, nämlich rein axial. Auch auf diese Weise kann das Material des Schaftbolzens optimal für die axiale Spannung eingesetzt werden.

Gegenüber herkömmlichen Verbindungen mittels normaler Gewindeschrauben ermöglicht die eingangs genannte Vorrichtung und das entsprechende Verfahren, dass weniger und/oder kleinere Verbindungsbolzen verwendet werden können. Es können auch die Flanschdurchmesser reduziert werden. Auf diese Weise kommt man zu geringeren Trägheitsmomenten, man kann Bauraum einsparen und Kosten verringern.

Auch wenn das Verfahren und die entsprechende Vorrichtung sich sehr bewährt haben, sind doch gewisse Nachteile festzustellen. Die konstruktive Auslegung erfordert nämlich eine Ausrichtung der Flanschbohrungen der beiden Flansche, die möglichst optimal ist. Allein durch das herkömmliche Bohren der Flanschbohrungen in entsprechenden Vorrichtungen lassen sich normalerweise keine Flanschbohrungen herstellen, die ansatzlos fluchten. Zumeist haben die Flanschbohrungen einen geringen axialen Versatz, geringe Durchmesserunterschiede und zusammengefasst jedenfalls keine ideale Kontur. Ihre Kontur unterscheidet sich von derjenigen, wie sie ein einzelnes Loch normalerweise hat.

Dies bedeutet, dass die Wellenflanschverbindung der eingangs genannten Art eine Nachbearbeitung der Flanschbohrungen erforderlich macht. Üblicherweise geschieht dies durch Reiben. Die Bohrungen werden zusammengerieben, bis beide Bohrungen so gut wie möglich fluchten. Die entsprechenden Arbeitsschritte sind aber ausgesprochen aufwendig, insbesondere zeit- und bearbeitungsaufwendig. Zwar muss man diesen Vorgang nur einmal durchführen, denn nach Lösen und erneutem Verbinden der Wellenflanschverbindung liegen die Flanschbohrungen passgenau vor, der Aufwand des Anpassens der Flanschbohrungen ist aber doch so hoch, dass er nachteilig ist und ein gewisser Vorbehalt der Anwender festzustellen ist, eine Wellenflanschverbindung der eingangs genannten Art allgemein einzusetzen.

Eine gattungsgemäße Wellenflanschverbindung ist aus US-A-5,170,551 bekannt.

Hier setzt nun die Erfindung ein. Sie hat es sich zur Aufgabe gemacht, die Wellenflanschverbindung und das entsprechende Verfahren so weiter zu entwickeln, dass die herkömmliche Herstellung der Flanschbohrungen allein durch Bohren ausreicht, um einen Presssitz zu erreichen, also die Flanschbohrung jedes Flansches vollständig mit Metall ausfüllen zu können.

Ausgehend von der Wellenflanschverbindung der eingangs genannten Art wird diese Aufgabe dadurch gelöst, dass der Innenkonus mindestens einer der beiden Hülsen eine Konusachse hat, die exzentrisch ist zur Zylinderachse des Mantels dieser Hülse, dass die erste Hülse und die zweite Hülse durch einen Luftspalt voneinander getrennt sind, und dass sich dieser Luftspalt im Bereich der Kontaktfläche befindet.

Bei dieser Wellenflanschverbindung ist nicht eine einzelne, relativ lange Hülse vorgesehen, die sich durch beide Flanschbohrungen erstreckt, vielmehr ist jeder Flanschbohrung eine eigene Hülse zugeordnet. Darüber hinaus und entscheidend ist zudem, dass mindestens eine der Hülsen exzentrisch ist, also ihr Innenkonus auf einer Konusachse liegt, die radial versetzt ist zur Achse, auf dem der Mantel derselben Hülse liegt. Dadurch ist es möglich, einen Versatz der Achslinien der Flanschbohrungen der beiden Wellenflansche auszugleichen. Die mindestens eine exzentrische Hülse wird solange innerhalb der entsprechenden Flanschbohrung gedreht, bis ihre Konusachse mit der Konusachse der anderen Hülse so gut wie möglich fluchtet.

Wenn beide Hülsen exzentrisch ausgeführt sind, ist ein größerer Bereich für einen Ausgleich von Versatz zwischen den Flanschbohrungen erreichbar.

Für eine Wellenflanschverbindung nach der Erfindung ist es somit nur noch erforderlich, dass die Flanschbohrungen im Wesentlichen durch einen Zylinder begrenzt werden. Unterschiede im Bohrungsdurchmesser der beiden Flanschbohrungen lassen sich ausgleichen, sofern sie innerhalb eines gewissen Bereichs liegen. Gleiches gilt für einen Versatz der Achslinien der Flanschbohrungen. Auch hier lassen sich, wie eben beschrieben, Abweichungen ausgleichen, sofern sie innerhalb gewisser Grenzen liegen.

Die angesprochenen Grenzen, innerhalb welcher ein Ausgleich möglich ist, liegen insbesondere im Bereich der verwendeten Materialien. Je größer der Versatz der Achsen der Flanschbohrungen ist, umso größer muss die Exzentrizität der Hülsen gewählt werden. Umso größer dann wird aber auch der Unterschied der Wandstärke der Hülsen an ihrer Stelle größer Exzentrizität im Vergleich zur Stelle kleinster Exzentrizität. Je größer die Wanddicke ist, umso schwieriger ist aber auch die elastische und ggf. plastische Verformung der Hülsen.

Wie im Stand der Technik liegen alle Kegelwinkel weit unterhalb dem Winkel der Selbsthemmung. Dieser liegt beispielsweise für Stahl auf Stahl etwa bei 7°. Die Kegelwinkel sind aber deutlich darunter. Auf diese Weise muss die einmal eingepresste Hülse nicht speziell gesichert werden. Insoweit besteht, wie bereits ausgeführt, kein Unterschied zum Stand der Technik. Hier werden entsprechende Kegelwinkel, wie an sich bekannt, verwendet.

Die beiden Hülsen sind jeweils nur einer Flanschbohrung zugeordnet. Eine Hülse bleibt also jeweils innerhalb der ihr zugeordneten Flanschbohrung. Es muss vermieden werden, dass die Hülsen über die Kontaktfläche der Flansche hinaus bewegt werden, weil an dieser Kontaktfläche Hindernisse vorhanden sein können, beispielsweise aufgrund des Versatzes der Flanschbohrungen oder aufgrund von Flanschbohrungen mit unterschiedlichem Durchmesser.

Um zu vermeiden, dass eine Hülse in den Bereich der Kontaktfläche gelangen kann, ist ein Abstandsmittel, insbesondere ein Ring, vorgesehen, das sich zwischen den beiden Hülsen befindet. Es ist so ausgeführt, dass es auf den Außenkonus aufgesteckt werden kann und außenseitig an keiner Stelle über einen Mantel einer Hülse hinausragt, vielmehr innerhalb des Zylinders beider Mäntel bleibt. Dieses Übertragungsmittel sichert die Position derjenigen Hülse, die beim Pressvorgang weiter entfernt ist von der Stelle, an der der axiale Zug eingeleitet wird, die sich also näher an der Stelle größten Durchmessers des Außenkonus befindet als die andere Hülse.

Die Wellenflanschverbindung ist auch für Verbindung von mehr als zwei Flanschen geeignet, entsprechend der Anzahl der Flansche werden Hülsen in gleicher Anzahl eingesetzt.

Weiterhin wird die Aufgabe gelöst durch ein Verfahren zum Herstellen einer Wellenflanschverbindung nach den Merkmalen des Anspruchs 10.

Diese Schritte lassen sich wie folgt erläutern:

Zunächst wird der Schaftbolzen zusammen mit den darauf befindlichen Hülsen und dem zwischen diesen Hülsen befindlichen Abstandsmittel in die beiden Flanschbohrungen eingeschoben. Nun wird mindestens eine Hülse so gedreht, bis sie am weitesten auf den ansteigenden Konus hinauf geschoben werden kann innerhalb der ihr zugeordneten Flanschbohrung. Nun wird, wenn dies überhaupt notwendig ist, was durch Versuch zu ermitteln ist, das Stirnende der Hülse im Bereich des kleinsten Außendurchmessers des Außenkonus axial fixiert. Der Schaftbolzen wird nun an der Stelle, wo er die kleinste Konizität hat, axial und relativ zum benachbarten Wellenflansch gezogen. Dabei bleiben die Hülsen stationär. Beide Hülsen werden expandiert und stellen einen Presssitz mit den Wänden der jeweiligen Flanschbohrung her. Auf diese Weise wird jegliches radiale Spiel innerhalb der Flanschbohrung abgebaut.

Entfernt man den axialen Zug, so bleibt der Presssitz erhalten. Vorzugsweise hat der Schaftbolzen an seinen beiden Endbereichen ein Gewinde. Auf dieses Gewinde werden Muttern, insbesondere Rundmuttern aufgedreht und handfest angezogen. Es wird nun an der gleichen Seite wie zuvor der Schaftbolzen axial gezogen, diesmal, um eine axiale Vorspannung im Schaftbolzen zu bewirken. Bei dem Zug wird der Schaftbolzen länger. Die erreichte Verlängerung wird durch Beidrehen der Muttern gesichert.

Nun kann die Schraubenspannvorrichtung abgenommen werden, die Vorspannkraft ist wirksam und die Flansche sind fest verspannt, es wird eine optimale Übertragung von Drehmoment erreicht.

Ein besonderer Vorteil der Wellenflanschverbindung der eingangs genannten Art liegt darin, dass ein Ausbau des Schaftbolzens möglich ist, dieser also wiederverwendbar ist. Hierzu hat der Schaftbolzen im Bereich der Fläche seines Außenkonus Austrittsöffnungen, insbesondere Nuten, für Öl unter Hochdruck. Zum Ausbau wird zunächst wieder die Schraubenspannvorrichtung aufgesetzt und der Schaftbolzen in die Länge gezogen, damit die Muttern gelöst und etwas zurückgedreht werden können. Nun werden die Nuten an der Fläche des Außenkonus mit Öl unter Druck gefüllt. Dadurch kommt der Schaftbolzen frei und kann herausgezogen werden. Es können dann auch die beiden Hülsen herausgenommen werden, da diese sich elastisch zusammenziehen und damit von der Wandung der Flanschbohrungen freikommen. Insoweit unterscheidet sich die Wellenflanschverbindung nicht vom Stand der Technik, sie behält aber den Vorteil der Lösbarkeit bei, den die Wellenflanschverbindung nach dem Stand der Technik hat.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung näher erläutert werden. In dieser Zeichnung zeigen:
- Fig. 1:: ein axiales Schnittbild durch eine Wellenflanschverbindung mit einem Schaftbolzen,
- Fig. 2:: ein Schnittbild ähnlich Figur 1, jedoch nur der Wellenflanschverbindung in unmittelbarer Umgebung eines Schaftbolzens, zudem ist der Konuswinkel übertrieben groß dargestellt und ist der Fall gezeigt, dass die beiden Flanschbohrungen genau zentrisch zueinander sind und ihre Bohrungsdurchmesser identisch sind,
- Fig. 3:: eine axiale Darstellung der Anordnung gemäß Figur 2, gezeigt sind der Schaftbolzen, die Hülse und die Flanschbohrung,
- Fig. 4:: eine Darstellung wie Figur 2, jetzt aber nun für den Fall, dass die beiden Schaftbohrungen einen Versatz zueinander haben, jedoch identische Bohrungsdurchmesser aufweisen,
- Fig. 5:: eine axiale Darstellung ähnlich Figur 3 der Anordnung gemäß Figur 4,
- Fig. 6:: eine Darstellung wie Figur 2, jedoch nun für den Fall, dass die Durchmesser der beiden Flanschbohrungen unterschiedlich sind, allerdings keinen Versatz haben, und
- Fig. 7:: eine Darstellung ähnlich Figur 3 für die Anordnung gemäß Figur 6.

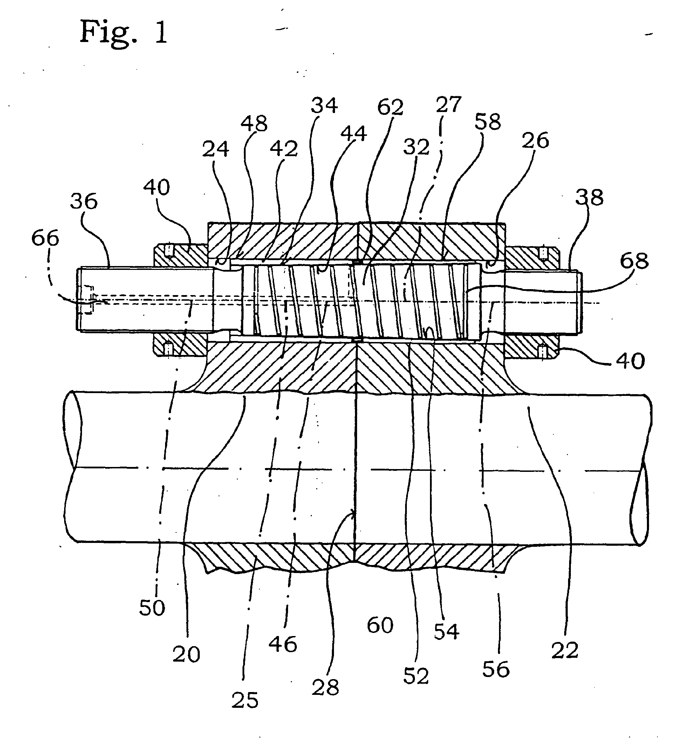

Bei der Wellenflanschverbindung gemäß Figur 1 sind ein erster Wellenflansch 20 und ein zweiter Wellenflansch 22 miteinander verbunden. Beide haben die gleiche Wandstärke. Dies ist aber nicht notwendig, die Wandstärken der beiden Wellenflansche 20, 22 können auch unterschiedlich sein. Die Flansche haben Flanschbohrungen, nämlich eine erste Flanschbohrung 24, die für die Flanschbohrungen des ersten Wellenflansches beispielhaft ist, und eine zweite Flanschbohrung 26, die ein Beispiel der Flanschbohrungen des zweiten Wellenflansches 22 ist. Die Flanschbohrung 24 hat ein Achse 25, die Flanschbohrung 26 hat eine Achse 27.

Wie in Figur 1 erkennbar ist, fluchten die beiden Achse 25, 27 und haben die Flanschbohrungen keinen Durchmesserunterschied. Dadurch liegt im Bereich einer Kontaktfläche 28, in der sich die beiden Wellenflansche 20, 22 berühren und fest aneinander liegen, ein stufenfreier Übergang vor.

Ein Schaftbolzen 32, der ein Beispiel von mehreren Schaftbolzen der Verbindung ist, durchgreift beide Flanschbohrungen 24, 26. Er hat einen Außenkonus 34, dessen Durchmesser sich in Figur 1 gesehen von links nach rechts vergrößert. Der tatsächliche Konuswinkel ist sehr gering und aus dem Stand der Technik bekannt. Beidseits dieses Außenkonus befinden sich, durch Übergangsbereiche getrennt, Gewindebereiche, nämlich ein linker Gewindebereich 36 und ein rechter Gewindebereich 38. Auf jeden Gewindebereich ist jeweils eine Mutter 40 aufgeschraubt, sie sichert eine mechanische axiale Vorspannung im Schaftbolzen 32, so dass die beiden Flansche 20, 22 fest aneinander gepresst werden.

Zwischen Außenkonus 34 und erster Flanschbohrung 24 befindet sich eine erste Hülse 42. Wie man erkennen kann, bleibt sie innerhalb des Bereichs des ersten Wellenflansches 20, ragt jedenfalls axial nicht über diesen hinaus. Die erste Hülse 42 hat einen Innenkonus 44, der dem Außenkonus 34 angepasst ist. Dieser Innenkonus hat eine Konusachse 46. Weiterhin hat die erste Hülse 42 einen zylindrischen Mantel 48. Er ist der ersten Flanschbohrung 24 angepasst. Er hat eine Zylinderachse 50, die exzentrisch ist zur Konusachse 46.

Zudem ist eine zweite Hülse 52 vorgesehen. Für sie trifft praktisch alles zu, was für die erste Hülse 42 gesagt wurde, jedoch immer unter Bezug auf die zweite Flanschbohrung 26. Auch die zweite Hülse ist exzentrisch. Sie ist insgesamt dünner als die erste Hülse 42, da sie sich in einem Bereich größerer Durchmesser des Außenkonus 34 befindet. Sie hat ebenfalls einen Innenkonus 54, eine Konusachse 56, einen Mantel 58 und eine Zylinderachse 60.

Zwischen beiden Hülsen 42, 52 befindet sich ein Ring 62, der ein Übertragungsmittel für eine axiale Kraft bildet. Er befindet sich im Bereich der Kontaktfläche 28, nämlich beidseitig dieser Kontaktfläche. Der Innendurchmesser ist so gewählt, dass er bequem über den Außenkonus 34 passt. Sein Außendurchmesser ist so gewählt, dass er an allen Stellen kleiner ist als die beiden Flanschbohrungen 24, 26, an diesen also nicht anschlagen kann.

Dieser Ring 62 hat eine axiale Länge, die so bemessen ist, dass die Hülsen 42, 52 immer innerhalb der zugeordneten Flanschbohrung 24 bzw. 26 bleiben.

Bevorzugt ist der Ring 62 wie folgt ausgebildet: Die beiden Hülsen 42, 52 kann man vorzugsweise aus einer relativ langen Hülse herstellen. Eine solche lange Hülse unterscheidet sich von der Hülsenanordnung nach dem Stand der Technik nur dadurch, dass sie exzentrisch ist. Die lange Hülse hat also einen durchgehenden Zylindermantel und einen durchgehenden Innenkonus. Diese lange Hülse wird nun etwa in der Mitte durchgetrennt, um die beiden Hülsen 42, 52 auszubilden. Der Trennschnitt wird so breit wie die axiale Breite des Rings 62 ausgeführt. Anschließend wird der Ring 62 hergestellt, er soll nur in Axialrichtung wirken und Kräfte zwischen den beiden Hülsen 42, 52 übertragen können. Er soll am Außenkonus 34 frei verschiebbar sein. Er soll weiterhin innerhalb der beiden Flanschbohrungen 24, 26 frei verschiebbar sein.

Um die Verhältnisse besser diskutieren zu können, sind in den folgenden Figuren die Konuswinkel stark übertrieben, dadurch werden insbesondere die Exzentrizitäten besser sichtbar.

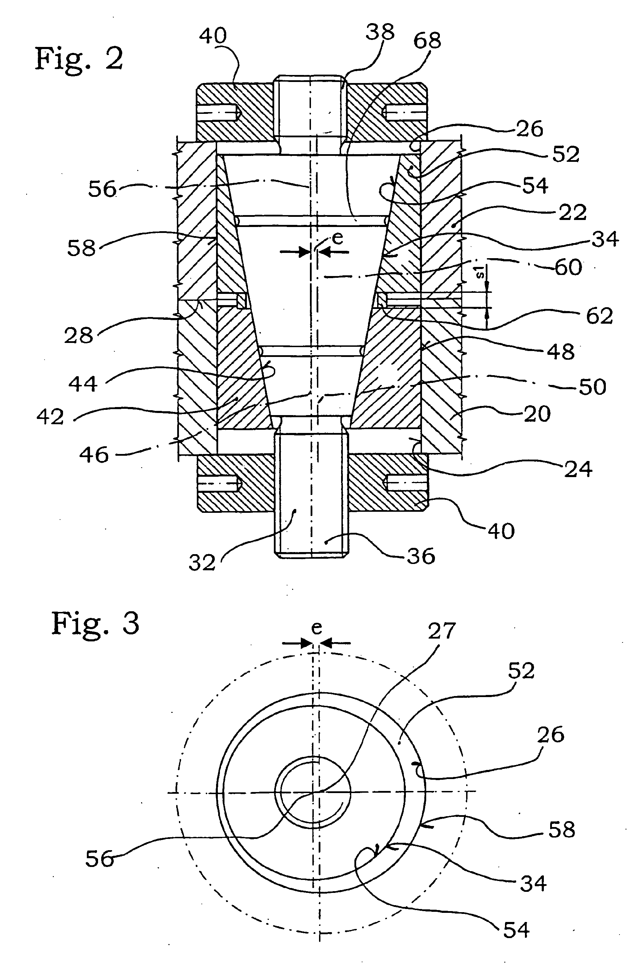

Die Ausführung nach den Figuren 2 und 3 zeigt noch einmal den Fall, wie er auch in Figur 1 dargestellt ist: Die Achsen 25, 27 der beiden Flanschbohrungen fluchten. Die Bohrungsdurchmesser sind identisch, an der Kontaktfläche 28 bildet sich keine Stufe. Aufgrund des größeren Konuswinkels ist die Exzentrizität e zwischen a) auf der einen Seite den Achsen 25, 27 der Flanschbohrungen, die zusammenfallen mit den Achsen der Mäntel 48, 58 der beiden Hülsen 42, 52 und b) auf der anderen Seite den hier zusammenfallenden Konusachsen 46, 56, die auf der gleichen Achslinie wie die Achse des Außenkonus 34 und auch die Achsen der beiden Gewindebereiche 36, 38 liegen. Es ist zu erkennen, dass die beiden Muttern 40 in der Figur 2 links über eine größere Strecke Kontakt mit dem jeweiligen Wellenflansch 20, 22 haben als auf der rechten Seite.

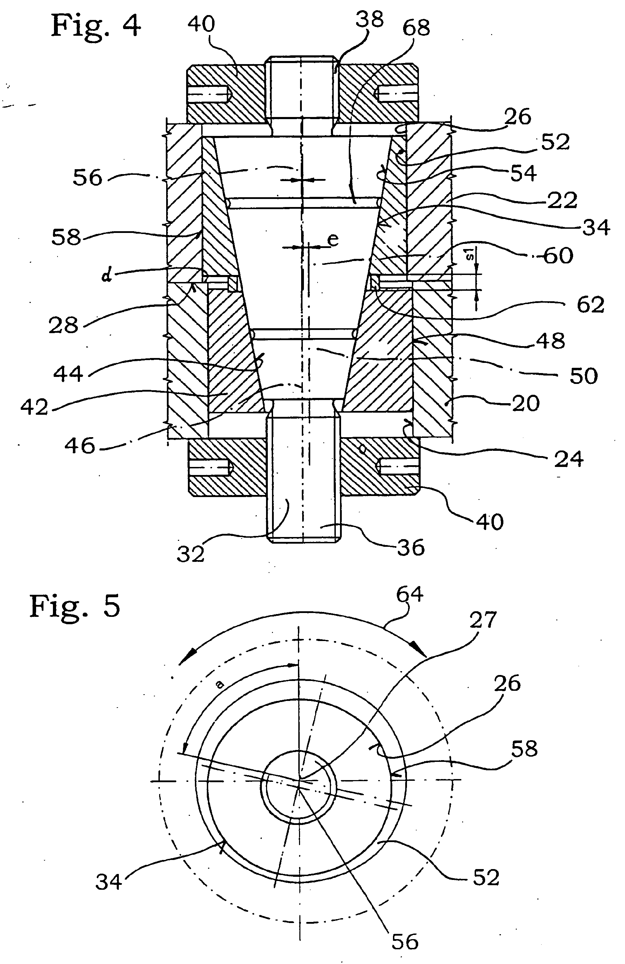

Die Anordnung nach den Figuren 4 und 5 stellt einen Zustand dar, bei dem die beiden Flanschbohrungen 24, 26 einen Versatz d aufweisen. Man erkennt eine Stufe 30 im Bereich der Kontaktfläche 28, sie hat die Breite d. Wiederum ist der Ring 62 mit einer axialen Länge s 1 eingezeichnet. In den hier besprochenen Ausführungsbeispielen der Fig. 2-7 ist er mit seinem Außenumfang an einer Schulter gehalten, die in den Figuren 2, 4 und 6 der untere, nämlich der erste Wellenflansch 20 ausbildet. Dadurch ist die Position des Rings 62 in radialer Richtung festgelegt. Er kann auch einstückig mit einer Hülse verbunden sein.

In Figur 4 und 5 ist die Anordnung und Positionierung der Hülse 42 im unteren, ersten Wellenflansches 20 ungeändert. Geändert ist aber der Drehzustand der Hülse 52 des zweiten, oberen Wellenflansches 22 in der nun gegenüber Figur 2 axial versetzten zweiten Flanschbohrung 26. Gegenüber dem Zustand nach Figur 2 ist die zweite Hülse 52 um den Winkel a gedreht, siehe Fig. 5.

Beim praktischen Einsatz wird mindestens eine Hülse 42, 52 solange im Sinne des Pfeils 64, siehe Figur 5, gedreht, bis die beiden Hülsen 42, 52 einen möglichst durchgehenden, gemeinsamen Innenkonus bilden, der sich aus den Teilstücken 44 und 54 zusammensetzt. Figur 4 zeigt, dass dieser Innenkonus kontinuierlich durchläuft und damit dem Außenkonus 34 möglichst gut angepasst ist.

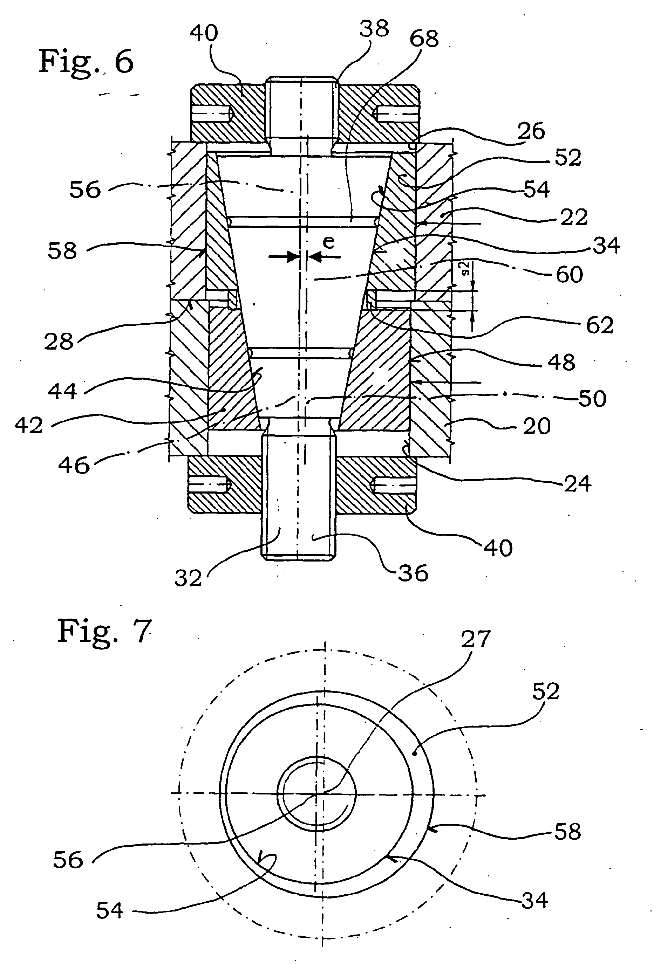

Der Erfindung liegt also das Prinzip zugrunde, dass man die beiden Hülsen 42, 52 so lange relativ zueinander dreht, bis ein möglichst optimaler, durchgehender Innenkonus erreicht wird. Auf diese Weise kann man, wie anhand von Figur 4 und Figur 5 nachgewiesen ist, versetzte Flanschbohrungen 24, 26 ausgleichen. Man kann aber auch, wie anhand der Figuren 6 und 7 noch nachgewiesen werden wird, Flanschbohrungen 24, 25 unterschiedlicher Durchmesser ausgleichen. Man kann sogar beides, also sowohl versetzte, als auch im Durchmesser unterschiedliche Flanschbohrungen ausgleichen. Dieser Ausgleich ist im Rahmen der Exzentrizität e beider Hülsen 42, 52 möglich.

Die Figuren 6 und 7 zeigen einen Zustand unterschiedlicher Durchmesser der Flanschbohrungen 24, 25. Diese Figuren zeigen auch ein weiteres Mittel, um einen durchgehenden Innenkonus beider Hülsen 42, 52 zu erhalten: Wenn die axiale Breite des Rings 62 vergrößert oder verkleinert wird, kann durch diese Maßnahme ebenfalls der gewünschte durchgehende Verlauf beider Innenkonusse 44, 54 zu einem durchgehenden Innenkonus erreicht werden.

In der Ausführung nach den Figuren 6 und 7 hat die axiale Länge des Rings 62 den Wert s2. Diese axiale Länge ist größer als die axiale Länge s 1 in den vorangegangenen Beispielen.

Wenn im Ausführungsbeispiel nach den Figuren 6 und 7 die Flanschbohrung 26 des oberen, zweiten Wellenflansches 22 im Durchmesser kleiner ist als die untere Flanschbohrung 24, wird die axiale Breite s2 des Rings 62 kleiner als s 1 gewählt.

Damit der Zustand gemäß den Figuren 6 und 7 ausgeglichen werden kann, werden Hülsen 42, 52 unterschiedlicher Außendurchmesser benutzt. Wie Figur 6 zeigt, hat die obere, zweite Hülse 52 einen Außendurchmesser d1, während die untere, erste Hülse 42 einen Außendurchmesser d2 hat. Der Außendurchmesser d 1 ist größer als der Außendurchmesser d2. Entsprechend sind auch die Mäntel 48, 58 der beiden Hülsen 42, 52 ausgebildet, also hat die obere Hülse 52 einen Mantel 58 mit größerem Radius.

In Figur 1 ist noch eine Innenbohrung 66 des Schaftbolzens 32 gezeigt, die in umfängliche Rillen 68 am Außenkonus mündet. Durch Druckbeaufschlagen dieser Rillen 68 mit Öl kann der Lösevorgang, wie eingangs beschrieben, durchgeführt werden. Auch in den Figuren 2, 4 und 6 sind Rillen 68 gezeigt.

Die Wandstärken der Hülsen 42, 52 sind den Durchmessern der Flanschbohrungen 24, 26 angepasst. Bei einem Durchmesser der Flanschbohrung von z.B. 30 mm liegen die Wandstärken typischerweise im Bereich um 2 mm, die Exzentrizität kann etwa im gleichen Bereich liegen. Bei Flanschbohrungen mit Durchmesser 140 mm, liegen die Wandstärken der Hülsen typischerweise im Bereich von 10 mm, im gleichen Bereich kann auch die Exzentrizität liegen. Die axiale Länge des Rings 62 liegt typischerweise im Bereich von Millimetern, beispielsweise im Bereich von 2-10 mm, typisch sind 5-8 mm.

## Patentansprüche

1. Wellenflanschverbindung mit
a) einem ersten und einem zweiten Wellenflansch (20, 22), die jeweils passende Flanschbohrungen (24, 26) aufweisen und die in einer Kontaktfläche (28) aneinander liegen, mit
b) mindestens einem Schaftbolzen (32), der einen Außenkonus (34) aufweist, und mit
c) einer mit diesem Schaftbolzen (32) zusammen wirkenden Hülsenänordnung, die einen Innenkonus hat, der dem Außenkonus (34) angepasst ist und die einen Mantel hat, der den Flanschbohrungen (24, 26) angepasst ist, wobei die Hülsenanordnung eine erste Hülse (42) und eine zweite Hülse (52) aufweist, wobei die beiden Hülsen jeweils einen Innenkonus (44, 54) haben,
**dadurch gekennzeichnet, dass** der Innenkonus (44, 54) mindestens einer der beiden Hülsen eine Konusachse (46, 56) hat, die exzentrisch ist zur Zylinderachse (50, 60) des Mantels (48, 58) dieser Hülse, dass die erste Hülse (42) und die zweite Hülse (52) durch einen Luftspalt voneinander getrennt sind, und dass sich dieser Luftspalt im Bereich der Kontaktfläche (28) befindet.

2. Wellenflanschverbindung nach Anspruch 1, **dadurch gekennzeichnet, dass** sich die erste Hülse (42) nur in der Flanschbohrung (24) des ersten Flansches (20) und dass sich die zweite Hülse (52) nur in der Flanschbohrung des zweiten Flansches (22) befindet.

3. Wellenflanschverbindung nach Anspruch 1, **dadurch gekennzeichnet, dass** der Luftspalt sich beidseits der Kontaktfläche (28) befindet.

4. Wellenflanschverbindung nach Anspruch 1, **dadurch gekennzeichnet, dass** die erste Hülse (42) kürzer ist als die Dicke des ersten Wellenflansches (20) ist, dass die zweite Hülse (52) kürzer als die Dicke des zweiten Wellenflansches (22) ist, insbesondere, dass die Hülsen (42, 52) 3 % bis 20 % kürzer sind als die Dicke des jeweiligen Flansches (20,22) beträgt.

5. Wellenflanschverbindung nach Anspruch 1, **dadurch gekennzeichnet, dass** die erste Hülse (42) einen Mantel (48) hat, der durch einen Zylinder begrenzt ist, und dass die zweite Hülse (52) einen Mantel (58) hat, der im Wesentlichen durch denselben Zylinder begrenzt ist, insbesondere genau denselben Zylinder begrenzt ist.

6. Wellenflanschverbindung nach Anspruch 1, **dadurch gekennzeichnet, dass** der Innenkonus (44) der ersten Hülse (42) denselben Kegelwinkel aufweist, wie der Innenkonus (54) der zweiten Hülse (52).

7. Wellenflanschverbindung nach Anspruch 1, **dadurch gekennzeichnet, dass** beide Hülsen (42, 52) eine Konusachse (46, 56) haben, die exzentrisch ist zur Zylinderachse (50, 60) des jeweiligen Mantels (48, 58) und dass vorzugsweise die Exzentrizität der ersten Hülse (42) gleich ist der Exzentrizität der zweiten Hülse (52).

8. Wellenflanschverbindung nach Anspruch 1, **dadurch gekennzeichnet, dass** die Hülsen hergestellt sind aus einer relativ langen Hülse (42, 52) die exzentrisch ist, durch Zerschneiden der relativ langen Hülse in die erste Hülse (42) und die zweite Hülse (52), wobei die Schnittbreite der Schnitte beim Zerschneiden der Breite des Luftspaltes in etwa entspricht.

9. Wellenflanschverbindung nach Anspruch 1, **dadurch gekennzeichnet, dass** sich zwischen den beiden Hülsen (42, 52) ein Druckübertragungsmittel, insbesondere ein Ring (62) befindet und dass die axiale Länge dieses Druckübertragungsmittels etwa der axialen Länge des Luftspaltes entspricht.

10. Wellenflanschverbindung nach Anspruch 9, **dadurch gekennzeichnet, dass** das Druckübertragungsmittel einen Außendurchmesser hat, der allseits kleiner ist als der Mantel (48, 58) der beiden Hülsen (42, 52), so dass das Druckübertragungsmittel niemals über die Mantelfläche der Hülsen (42, 52) axial hinausragt.

11. Verfahren zur Herstellung einer Wellenflanschverbindung eines ersten Wellenflansches (22) mit einem zweiten Wellenflansch (22), die jeweils passende Flanschbohrungen (24, 26) aufweisen und die an einer Kontaktfläche (28) aneinander liegen, mittels Schaftbolzen (32), die einen Außenkonus (34) aufweisen und mittels jeweils einer mit einem Schaftbolzen (32) zusammenwirkenden Hülsenanordnung, die einen Innenkonus hat, der dem Außenkonus (34) angepasst ist und die einen Mantel (48, 58) hat, der den Flanschbohrungen (24, 26) angepasst ist, wobei die Hülsenanordnung eine erste Hülse (42) und eine zweite Hülse (52) aufweist, die beiden Hülsen (42, 52) jeweils einen Innenkonus (44, 54) haben, der Innenkonus (44, 54) mindestens einer der beiden Hülsen eine Konusachse (46, 56) hat, die exzentrisch ist zur Zylinderachse (50, 60) des Mantels (48, 58) dieser Hülse und mittels eines Druckübertragungsmittels, insbesondere Ringes (62), der in jeder beliebigen Position der Hülsen (42, 52) innerhalb der benachbarten Stirnflächen der Hülsen (42, 52) ist, **gekennzeichnet durch** folgende Verfahrensschritte:
a) Einbringen der beiden Hülsen (42, 52), des dazwischen befindlichen Abstandsmittels (62) und des Schaftbolzens (32) in im Wesentlichen fluchtende Flanschbohrungen (24, 26) des ersten und des zweiten Wellenflansches (20, 22), Drehen mindestens einer Hülse, so dass diese eine Position annimmt, in der sie so weit wie möglich auf den ansteigenden Außenkonus (34) hochgeschoben ist, und
b) mechanisches Ziehen des Schaftbolzens (32) in axialer Richtung an der Stelle des Schaftbolzens (32), wo dieser den kleinsten Durchmesser des Außenkonus (34) aufweist, wobei sich die beiden Hülsen (42, 52) aufweiten und ein Presssitz erreicht wird, und axiales Vorspannen des Schaftbolzens (32), insbesondere mittels einer hydraulischen Spannvorrichtung, und mechanisches Sichern der erreichten Vorspannung, insbesondere mittels Muttern, die auf Gewindebereiche des Schaftbolzens (32) aufgeschraubt werden.

## Claims

1. A shaft flange connection with
a) a first and a second shaft flange (20, 22), each comprising matching flange holes (24, 26) and being adjacent by a contact surface (28), with
b) at least one shaft bolt (32) having an outer cone (34) and with
c) a bushing arrangement which cooperates with said shaft bolt (32) and has an inner cone matching said outer cone (34) and a jacket matching said flange holes (24, 26), said bushing arrangement comprising a first bushing (42) and a second bushing (52), said two bushings each having an inner cone (44, 54),
**characterized in that** said inner cone (44, 54) of at least one of said two bushings has a cone axis (46, 56) that is eccentric to the cylinder axis (50, 60) of said jacket (48, 58) of said bushing, that said first bushing (42) and said second bushing (52) are separated by an air gap and that said air gap is located in the region of said contact surface (28).

2. The shaft flange connection as set forth in claim 1, **characterized in that** the first bushing (42) is only located in the flange hole (24) of the first flange (20) and that the second bushing (52) is only located in the flange hole of the second flange (22).

3. The shaft flange connection as set forth in claim 1, **characterized in that** the air gap is located on either side of the contact surface (28).

4. The shaft flange connection as set forth in claim 1, **characterized in that** the first bushing (42) is shorter than the thickness of the first shaft flange (20), that the second bushing (52) is shorter than the thickness of the second shaft flange (22), more specifically that the bushings (42, 52) are 3 % to 20 % shorter than the thickness of a respective one of the flanges (20, 22).

5. The shaft flange connection as set forth in claim 1, **characterized in that** the first bushing (42) has a jacket (48) that is defined by a cylinder and that the second bushing (52) has a jacket (58) that is defined by substantially the same cylinder, more specifically by exactly the same cylinder.

6. The shaft flange connection as set forth in claim 1, **characterized in that** the inner cone (44) of the first bushing (42) has the same cone angle as the inner cone (54) of the second bushing (52).

7. The shaft flange connection as set forth in claim 1, **characterized in that** both bushings (42, 52) have a cone axis (46, 56) that is eccentric to the cylinder axis (50, 60) of a respective one of the jackets (48, 58) and that preferably the eccentricity of the first bushing (42) is equal to the eccentricity of the second bushing (52).

8. The shaft flange connection as set forth in claim 1, **characterized in that** the bushings are made from quite a long, eccentric, bushing (42, 52) which is cut into the first bushing (42) and the second bushing (52), the width of the cuts when cutting the bushing corresponding approximately to the width of the air gap.

9. The shaft flange connection as set forth in claim 1, **characterized in that** a pressure transmitting means, more specifically a ring (62), is located between the two bushings (42, 52) and that the axial length of said pressure transmitting means corresponds approximately to the axial length of the air gap.

10. The shaft flange connection as set forth in claim 9, **characterized in that** the pressure transmitting means has an outer diameter that is smaller than the jacket (48, 58) of the two bushings (42, 52) on all sides so that said pressure transmitting means will never axially project beyond the outer surface area of the bushings (42, 52).

11. A method of establishing a shaft flange connection between a first shaft flange (22) and a second shaft flange (22), each comprising matching flange holes (24, 26) and being adjacent by a contact surface (28), by means of shaft bolts (32) comprising an outer cone (34) and by means of bushing arrangements, each cooperating with a respective one of said shaft bolts (32) and having an inner cone matching the outer cone (34) and a jacket (48, 58) matching the flange holes (24, 26), said bushing arrangement comprising a first bushing (42) and a second bushing (52), said two bushings (42, 52) each having an inner cone (44, 54), said inner cone (44, 54) of at least one of said two bushings having a cone axis (46, 56) that is eccentric to the cylinder axis (50, 60) of said jacket (48, 58) of said bushing, and by means of a pressure transmitting means, more specifically of a ring (62), that is within the neighbouring end surfaces of the bushings (42, 52) in any position of said bushings (42, 52), **characterized by** the following method steps:
a) introducing said two bushings (42, 52), the interposed spacer (62) and the shaft bolt (32) into substantially aligned flange holes (24, 26) of the first and the second shaft flange (20, 22), turning at least one bushing so that it adopts a position in which it is pushed upward as far as possible onto the rising outer cone (34), and
b) mechanically pulling the shaft bolt (32) in the axial direction at that point of said shaft bolt (32) where the latter has the smallest outer cone (34) diameter, said two bushings (42, 52) widening and an press-fit relation being obtained, and axially pre-tensioning said shaft bolt (32), more specifically by means of a hydraulic tensioning device, and mechanically securing the pre-tension obtained, more specifically by means of nuts that are screwed onto threaded regions of said shaft bolt (32).

## Revendications

1. Accouplement de brides pour arbre avec
a) une première et une deuxième bride (20, 22) pour arbre, adjacentes par une surface de contact (28), et comportant chacune des trous (24, 26) conjugués, avec
b) au moins un boulon (32) comportant un cône externe (34) et avec
c) un agencement de douilles qui coopère avec ce boulon (32) et a un cône interne adapté au cône externe (34) et qui a une chemise adaptée aux trous (24, 26) ménagés dans la bride, l'agencement de douilles comportant une première douille (42) et une deuxième douille (52), les deux douilles ayant chacune un cône interne (44, 54),
**caractérisé en ce que** le cône interne (44, 54) d'au moins une des deux douilles a un axe (46, 56) de cône excentré par rapport à l'axe (50, 60) du cylindre de la chemise (48, 58) de cette douille, que la première douille (42) et la deuxième douille (52) sont séparées l'une de l'autre par une fente et que cette fente se situe à la hauteur de la surface de contact (28).

2. Accouplement de brides pour arbre selon la revendication 1, **caractérisé en ce que** la première douille (42) ne se situe que dans le trou (24) de la première bride (20) et que la deuxième douille (52) ne se situe que dans le trou de la deuxième bride (22).

3. Accouplement de brides pour arbre selon la revendication 1, **caractérisé en ce que** la fente se situe de part et d'autre de la surface de contact (28).

4. Accouplement de brides pour arbre selon la revendication 1, **caractérisé en ce que** la première douille (42) est plus courte que l'épaisseur de la première bride (20), que la deuxième douille (52) est plus courte que l'épaisseur de la deuxième bride (22), notamment que les brides (42, 52) sont de 3 % à 20 % plus courtes que l'épaisseur de la bride respective (20, 22).

5. Accouplement de brides pour arbre selon la revendication 1, **caractérisé en ce que** la première douille (42) a une chemise (48) délimitée par un cylindre et que la deuxième douille (52) a une chemise (58) qui est délimitée par sensiblement le même cylindre, notamment par exactement le même cylindre.

6. Accouplement de brides pour arbre selon la revendication 1, **caractérisé en ce que** le cône interne (44) de la première douille (42) a le même angle de cône que le cône interne (54) de la deuxième douille (52).

7. Accouplement de brides pour arbre selon la revendication 1, **caractérisé en ce que** les deux douilles (42, 52) ont un axe de cône (46, 56) excentré par rapport à l'axe (50, 60) du cylindre de la chemise (48, 58) respective et que l'excentricité de la première douille (42) est de préférence égale à l'excentricité de la deuxième douille (52).

8. Accouplement de brides pour arbre selon la revendication 1, **caractérisé en ce que** les douilles sont réalisées à partir d'une douille (42, 52) excentrique relativement longue que l'on coupe pour obtenir la première douille (42) et la deuxième douille (52), la largeur des coupures correspondant environ à la largeur de la fente.

9. Accouplement de brides pour arbre selon la revendication 1, **caractérisé en ce qu'**un moyen de transmission de pression, notamment une bague (62), est interposée entre les deux douilles (42, 52) et que la longueur axiale de ce moyen de transmission de pression correspond environ à la longueur axiale de la fente.

10. Accouplement de brides pour arbre selon la revendication 9, **caractérisé en ce que** le moyen de transmission de pression a un diamètre extérieur inférieur sur tous ses côtés à la chemise (48, 58) des deux douilles (42, 52) de sorte que le moyen de transmission de pression ne déborde jamais axialement la surface extérieure des douilles (42, 52).

11. Procédé de réalisation d'un accouplement d'une première bride (22) avec une deuxième bride (22) pour arbre, ces deux brides étant adjacentes par une surface de contact (28) et comportant chacune des trous (24, 26) conjugués, moyennant des boulons (32) d'arbre comportant un cône externe (34) et moyennant un agencement de douilles respectif qui coopère avec un boulon (32) et a un cône interne adapté au cône externe (34) et qui a une chemise (48, 58) qui est adaptée aux trous (24, 26) ménagés dans la bride, l'agencement de douille comportant une première douille (42) et une deuxième douille (52), les deux douilles (42, 52) ayant chacune un cône interne (44, 54), le cône interne (44, 54) d'au moins une des deux douilles ayant un axe de cône (46, 56) excentré par rapport à l'axe (50, 60) du cylindre de la chemise (48, 58) de cette douille et moyennant un moyen de transmission de pression, notamment une bague (62), qui dans n'importe quelle position des douilles (42, 52) est située au sein des faces d'extrémité voisines des douilles (42, 52), **caractérisé par** les étapes suivantes :
a) on introduit les deux douilles (42, 52), la pièce d'écartement (62) interposée et le boulon (32) de l'arbre dans des trous (24, 26) sensiblement en ligne l'un par rapport à l'autre et ménagés dans la première et dans la deuxième bride (20, 22) de l'arbre, on tourne au moins une douille de manière à lui faire prendre une position dans laquelle elle est glissée le plus haut possible sur le cône externe (34) ascendant et
b) on tire mécaniquement sur le boulon (32) de l'arbre suivant la direction axiale à l'endroit du boulon (32) ayant le plus petit diamètre du cône externe (34), les deux douilles (42, 52) s'élargissant de sorte que l'on obtient un emmanchement à force, et on précontraint axialement le boulon (32), notamment moyennant un dispositif de serrage hydraulique, et on fixe mécaniquement la précontrainte obtenue, notamment moyennant des écrous que l'on visse sur les régions filetées du boulon (32) de l'arbre.
